# EUROPEAN PATENT APPLICATION

(11) **EP 4 498 489 A1**
(43) Date of publication of application: **29.01.2025**
(21) Application number: 22964038.8
(22) Date of filing: 04.11.2022
(51) Int. Cl.: H01M 50/155, H01M 50/562

(54) **END COVER, BATTERY CELL, BATTERY, AND ELECTRIC DEVICE**

(71) Applicant: Contemporary Amperex Technology Co., Limited, Fujian 352100 (CN)
(72) Inventor: SU, Huasheng, Ningde, Fujian 352100 (CN); LI, Quankun, Ningde, Fujian 352100 (CN); XING, Chengyou, Ningde, Fujian 352100 (CN); WANG, Peng, Ningde, Fujian 352100 (CN); JIN, Haizu, Ningde, Fujian 352100 (CN)
(74) Representative: von Tietzen und Hennig, Nikolaus
(86) International application number: PCT/CN2022/129921
(87) International publication number: WO 2024/092731

(57) **Abstract**

Some embodiments of this application provide an end cap, a battery cell, a battery, and an electrical device. The end cap includes a first connection structure and a second connection structure. The first connection structure is connected to the second connection structure. The first connection structure includes a first metal, and is configured to be welded to an electrode terminal. The second connection structure includes a second metal, and is configured to be welded to a busbar component. The technical solution according to this application can increase an output current of the battery, thereby improving performance of the battery.

## Description

### TECHNICAL FIELD

This application relates to the technical field of batteries, and in particular, to an end cap, a battery cell, a battery, and an electrical device.

### BACKGROUND

With the aggravation of environmental pollution, the new energy industry is attracting more and more attention. Battery technology is crucial to the development of the new energy industry.

In the development of battery technology, how to enhance the performance of a battery is a pressing challenge in the battery technology.

### SUMMARY

In view of the above situation, some embodiments of this application provide an end cap, a battery cell, a battery, and an electrical device to increase an output current of the battery, and in turn, improve performance of the battery.

According to a first aspect, an end cap is provided. The end cap includes a first connection structure and a second connection structure. The first connection structure is connected to the second connection structure. The first connection structure includes a first metal, and is configured to be welded to an electrode terminal. The second connection structure includes a second metal, and is configured to be welded to a busbar component.

In an embodiment of this application, the electrode terminal is configured to implement internal electrical connection of the battery, and the busbar component is configured to electrically connect the battery to the outside. When the first connection structure is connected to the electrode terminal, electrical connection is implemented between the electrode terminal and the first connection structure. When the first connection structure is connected to the second connection structure, electrical connection is implemented between the first connection structure and the second connection structure. When the busbar component is connected to the second connection structure, electrical connection is implemented between the second connection structure and the busbar component. By disposing the first connection structure and the second connection structure, the current is enabled to flow from the electrode terminal to the busbar component directly, thereby avoiding current loss caused by the need to pass through the housing of the battery, and in turn, increasing the output current of the battery and improving performance of the battery.

In a possible embodiment, the electrode terminal is made of a material including copper. The first metal is copper or nickel-plated steel.

In this embodiment of this application, when the electrode terminal includes copper and the first metal in the first connection structure is copper or nickel-plated steel, the copper-containing electrode terminal can be directly welded to the first connection structure. By making the first metal in the first connection structure be copper or nickel-plated steel, the electrode terminal can be directly welded to the first connection structure to transmit a current efficiently and avoid current loss, and increase the current flowing from the battery to the outside.

In a possible embodiment, the busbar component is made of a material including aluminum. The second metal is aluminum.

In this embodiment of this application, when the busbar component includes aluminum and the second metal in the second connection structure is aluminum, the aluminum-containing busbar component can be directly welded to the second connection structure. Aluminum is cheap and easily available. The electrical connection between the battery and the outside is implemented by the aluminum-containing busbar component, thereby reducing the cost of the battery and facilitating applications in mass production. In addition, the second metal in the second connection structure is aluminum, thereby implementing a firm connection between the battery and the outside, avoiding current loss, and increasing the current flowing from the battery to the outside.

In a possible embodiment, the first connection structure is embedded in the second connection structure.

In this embodiment of this application, by embedding the first connection structure into the second connection structure, a firm connection is implemented between the first connection structure and the second connection structure.

In a possible embodiment, the first connection structures are symmetrically distributed at both ends of the second connection structure by being centered on the second connection structure.

In this embodiment of this application, the battery includes two electrode terminals. By distributing the first connection structures at both ends of the second connection structure, both electrode terminals are electrically connected to the first connection structures. With the first connection structures distributed symmetrically at both ends of the second connection structure by being centered on the second connection structure, the first connection structures distributed at both ends can be electrically connected to the two electrode terminals respectively, thereby further improving the effect of electrical connection between the first connection structure and the electrode terminal.

In a possible embodiment, the second connection structure is a columnar structure with step structures at both ends. The first connection structure is embedded in the step structures.

In this embodiment of this application, when both ends of the second connection structure are provided with a step structure, the first connection structure can be embedded in the step structure. In this way, the first connection structures are enabled to be symmetrically distributed on both ends of the second connection structure by being centered on the second connection structure, thereby implementing an electrical connection between the electrode terminal and the first connection structure.

In a possible embodiment, the second connection structure is embedded in the first connection structure.

In this embodiment of this application, by embedding the second connection structure into the first connection structure, a firm connection is implemented between the first connection structure and the second connection structure, and between the second connection structure and the busbar component.

In a possible embodiment, the second connection structure is located in the middle of the first connection structure.

In this embodiment of this application, the first connection structure is configured to be electrically connected to the electrode terminal, and the second connection structure is configured to electrically connect the battery to the outside. By letting the second connection structure be located in the middle of the first connection structure, a firm electrical connection can be implemented between the battery and the outside by the first connection structure and the second connection structure.

In a possible embodiment, the first connection structure is a columnar structure with a groove in the middle. The second connection structure is embedded in the groove.

In this embodiment of this application, when a groove is created in the middle of the first connection structure, the second connection structure can be embedded into the groove. By letting the second connection structure be located in the groove in the middle of the first connection structure, the second connection structure is positioned at the center of the first connection structure, thereby implementing an electrical connection between the battery and the outside.

In a possible embodiment, the first connection structure is connected to the second connection structure by thermal bonding.

In this embodiment of this application, the end cap structure connected by thermal bonding possesses a relatively low internal resistance. In other words, when the first connection structure is connected to the second connection structure by thermal bonding, the current can be more efficiently transferred from the first connection structure to the second connection structure to implement transfer of a relatively large current between the battery and the outside, thereby improving performance of the battery.

In a possible embodiment, in a first direction, a dimension of the first connection structure is not less than 2 mm, and the first direction is perpendicular to an axis of the end cap.

In this embodiment of this application, if the dimension of the first connection structure in the first direction is deficient, the first connection structure is unable to be well connected to the electrode terminal. By making the dimension of the first connection structure in the first direction not less than 2 mm, the connection between the first connection structure and the electrode terminal is made to be firm, thereby implementing a firm electrical connection.

In a possible embodiment, in a first direction, a dimension of the second connection structure is not less than 5 mm.

In this embodiment of this application, the second connection structure is connected to the busbar component to implement an electrical connection between the battery and the outside. If the dimension of the second connection structure in the first direction is less than 5 mm, the connection between the second connection structure and the busbar component is not firm. By making the dimension of the second connection structure in the first direction not less than 5 mm, a stable connection is ensured between the second connection structure and the busbar component.

In a possible embodiment, in a second direction, a dimension of the first connection structure is not less than 0.8 mm. The second direction is parallel to an axis of the end cap.

In this embodiment of this application, the first connection structure needs to be connected to the second connection structure to ensure normal transmission of the current. If the dimension of the first connection structure in the second direction is deficient, the connection between the first connection structure and the second connection structure may be weak. By making the dimension of the first connection structure in the second direction not less than 0.8 mm, the connection between the first connection structure and the second connection structure is ensured to be firm.

In a possible embodiment, in a second direction, a dimension of the second connection structure is not less than 2 mm.

In this embodiment of this application, the second connection structure needs to be connected to the busbar component to implement an electrical connection between the battery and the outside. By making the dimension of the second connection structure in the second direction not less than 2 mm, a stable connection is ensured between the second connection structure and the busbar component.

According to a second aspect, a battery cell is provided. The battery cell includes: an electrode assembly; a housing with an accommodation cavity, configured to accommodate the electrode assembly; and a top cover, where a first terminal hole is created on the top cover; a first electrode terminal, mounted in the first terminal hole, where a recess is formed on a surface of the first electrode terminal, the surface being oriented away from the electrode assembly; and the end cap according to any one of the foregoing embodiments. The end cap fits and covers the recess.

In a possible embodiment, the battery cell further includes: a bottom cover, where a second terminal hole is created on the bottom cover; and a second electrode terminal, mounted in the second terminal hole. The second electrode terminal is opposite to the first electrode terminal.

In this embodiment of this application, a first electrode terminal and a second electrode terminal are disposed. The two electrode terminals are a positive electrode and a negative electrode of the battery cell respectively, and are configured to output a current, so as to ensure that the battery can output the current normally.

According to a third aspect, a battery is provided. The battery includes: a plurality of the battery cells according to the foregoing embodiment; and a busbar component, configured to electrically connect the plurality of battery cells.

According to a fourth aspect, this application provides an electrical device. The electrical device includes the battery disclosed in the foregoing embodiment. The battery is configured to provide electrical energy.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic exploded view of a battery according to an embodiment of this application;
FIG. 3 is a schematic exploded view of a battery cell according to an embodiment of this application;
FIG. 4 is a schematic structural diagram of a battery cell according to another embodiment of this application;
FIG. 5 is a schematic structural diagram of an end cap according to an embodiment of this application;
FIG. 6 is a cross-sectional view of FIG. 5 sectioned along a D-D line; and
FIG. 7 is another cross-sectional view of FIG. 5 sectioned along a D-D line.

The drawings are not drawn to scale.

List of reference numerals:
vehicle 1000;
battery 100, first part 111, second part 112, controller 200, motor 300;
box 10, battery cell 20, end cap 21, top cover 22, negative electrode connection strap 23, electrode assembly 24, housing 25, positive electrode connection strap 26, bottom cover 27, aluminum nail 28, electrode terminal 29;
first connection structure 211, second connection structure 212, first electrode terminal 291, second electrode terminal 292, first direction X, second direction Y

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of the present invention without making any creative effort fall within the protection scope of the present invention.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

The battery in some embodiments of this application may be a lithium-ion battery, a lithium metal battery, a lead-acid battery, a nickel-cadmium battery, a nickelhydrogen battery, a lithium-sulfur battery, a lithium-air battery, a sodium-ion battery, or the like. The type of the battery is not particularly limited herein.

To meet different power demands, a plurality of battery cells in a battery may be connected in series, parallel, or series-and-parallel pattern. The series-and-parallel pattern means a combination of series connection and parallel connection. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery. The battery is further mounted in the electrical device to provide electrical energy for the electrical device.

Currently, the market trend shows that power batteries are applied in more and more fields. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

The applicant hereof has noticed that an existing cylindrical cell typically includes only one electrode terminal, and a material that is used on the cell for connecting to a busbar component of an external module is nickel-plated steel and aluminum. The busbar component of the module is mostly made of an aluminum bar, a nickel sheet, or a nickel-plated material. Therefore, when a current is generated inside the cylindrical cell, the current needs to pass through the housing of the cylindrical cell first. The internal resistance of the housing is relatively high, thereby causing the output current of the cylindrical cell to be smaller, and in turn, causing a decline in the performance of the cylindrical cell.

In order to solve the problem of inferior performance of existing cylindrical batteries caused by the inability of the batteries to output a relatively large current, an embodiment of this application provides an end cap. With the end cap, a cylindrical battery fitted with a positive electrode terminal and a negative electrode terminal enables both the positive electrode terminal and the negative electrode terminal to be electrically connected to a busbar component directly. In this way, the current can flow from the electrode terminals to the outside directly without passing through the housing of the battery cell, thereby increasing the output current of the battery cell and improving performance of the battery.

It is hereby noted that the end cap provided in this application is applicable to, but not limited to use in, cylindrical batteries, especially the 4680 structure of cylindrical batteries.

The battery cell disclosed in embodiments of this application is applicable to, but not limited to use in, electrical devices such as a vehicle, watercraft, or aircraft. The battery cell, the battery, and the like disclosed in this application may be used to form a power supply system of the electrical device to increase the current of the cylindrical cell in the power supply system and improve performance of the cylindrical cell.

All technical solutions described herein are applicable to various battery-powered devices such as a mobile phone, a portable device, a laptop computer, an electric power cart, an electrical toy, an electric tool, an electric vehicle, a watercraft, and a spacecraft. The electric toy may include stationary or mobile electric toys, such as a game console, an electric car toy, an electric ship toy, and an electric airplane toy. The spacecraft may include an airplane, a rocket, a space shuttle, a spaceship, and the like.

Understandably, the technical solutions described in the embodiments of this application are not only applicable to the devices mentioned above, but also applicable to all battery-powered devices. However, for brevity, the following embodiments are described by using an electric vehicle as an example.

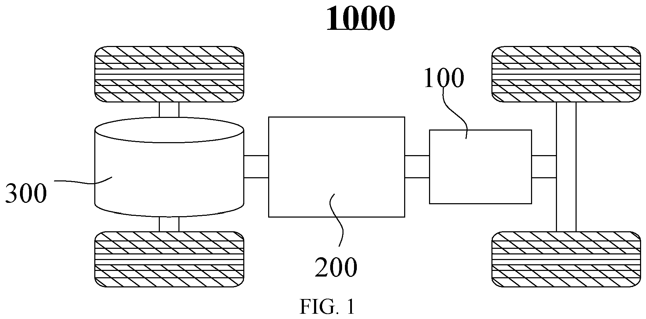

For example, FIG. 1 is a schematic structural diagram of a vehicle 1000 according to some embodiments of this application. The vehicle 1000 may be an oilfueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

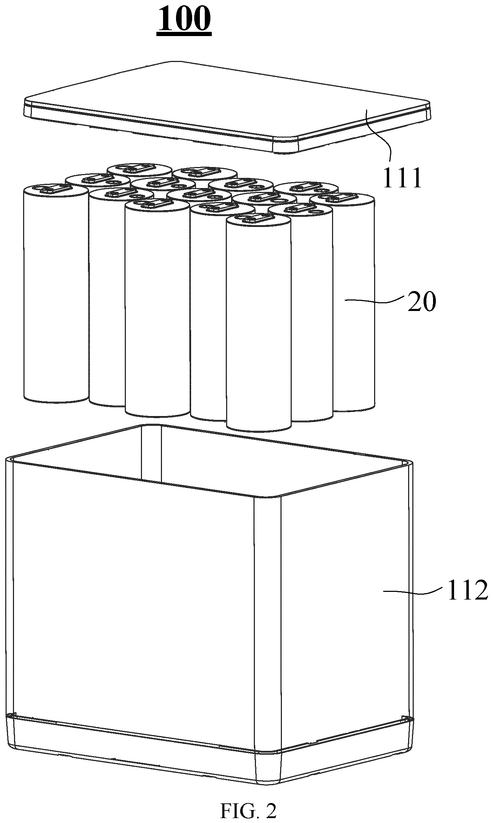

For example, FIG. 2 is a schematic structural diagram of a battery 100 according to an embodiment of this application. The battery 100 may include a plurality of battery cells 20. The battery 100 may further include a box 10 (or referred to as a casing) in addition to the battery cell. The box 10 is hollowed out inside. A plurality of battery cells 20 are accommodated in the box 10. As shown in FIG. 2, the box 10 may include two parts, herein referred to as a first part 111 and a second part 112 respectively. The first part 111 and the second part 112 are snap-fitted together. The shapes of the first part 111 and the second part 112 may depend on the shape of a plurality of battery cells 20 combined. An opening may be created on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box 10 that includes a closed cavity. The plurality of battery cells 20 are combined and connected in parallel, series, or series-and-parallel pattern, and then placed into the box that is formed by snap-fitting the first part 111 and the second part 112.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box. The battery 100 may further include other structures. For example, the battery 100 may further include a busbar component (not shown in the drawing). The busbar component is configured to implement an electrical connection between the plurality of battery cells 20.

Each battery cell 20 may be, but is not limited to, a secondary battery or primary battery; or, may be a lithium-sulfur battery, a sodium-ion battery, or a magnesium-ion battery.

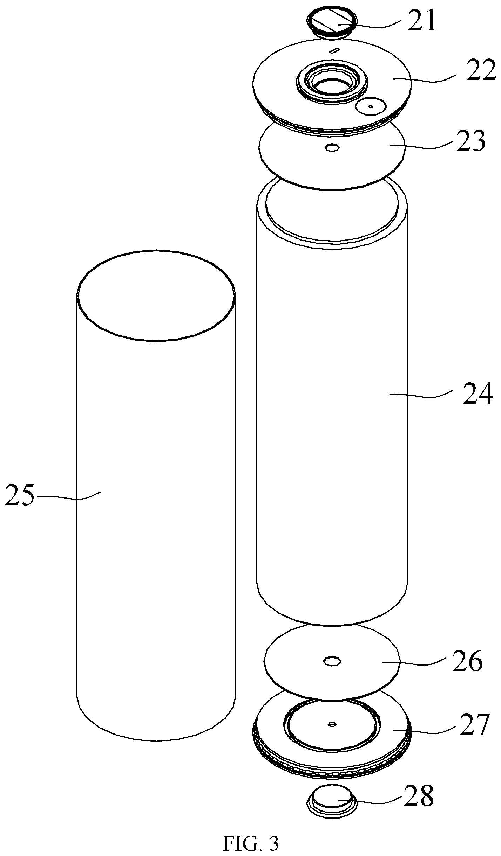

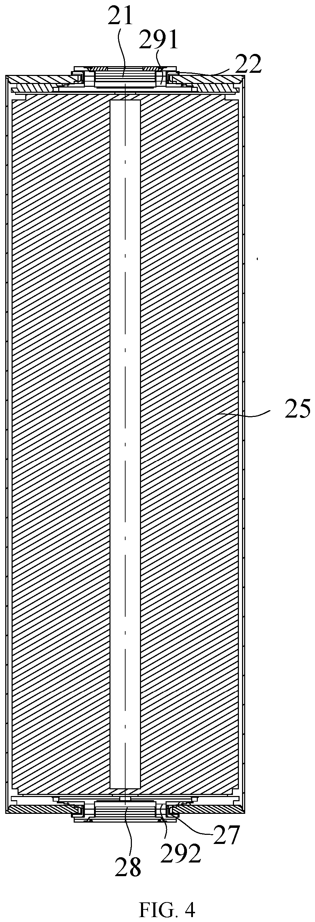

FIG. 3 is a schematic exploded view of a battery cell according to an embodiment of this application; and FIG. 4 is a schematic structural diagram of a battery cell 20 according to another embodiment of this application. As shown in FIG. 3 and FIG. 4, the battery cell 20 may include an end cap 21, a top cover 22, a negative electrode connection strap 23, an electrode assembly 24, a housing 25, a positive electrode connection strap 26, a bottom cover 27, and an aluminum nail 28. The housing 25 and the end cap 21 form a shell or a battery case. The wall of the housing 25 and the wall of the end cap 21 are all referred to as walls of the battery cell 20. The shape of the housing 25 depends on the shape of one or more electrode assemblies 24 combined together. When the housing 25 is a hollow cylinder, an end face of the housing 25 may be an opened face. That is, this end face is not walled so that the inside of the housing 25 communicates with the outside. As can be seen from FIG. 3, the housing 25 of the cylindrical cell 20 includes two circular end faces. The part between the two circular end face is a cylinder body. The cylinder body may include an electrode assembly 24. The top cover 22 and the bottom cover 27 cover an upper opening and a lower opening respectively, and are connected to the housing 25 to form a closed cavity configured to accommodate the electrode assembly 24. The housing 25 is filled with an electrolyte such as an electrolyte solution.

In an embodiment of this application, the housing 25, the top cover 22, and the bottom cover 27 may be formed in one piece or made separately, without being limited herein.

The battery cell 20 further includes electrode terminals 29. The electrode terminals 29 are inserted into the top cover 22 and the bottom cover 27 respectively to get electrically connected to the end cap 21 or the aluminum nail 28 respectively. Further, the electrode terminals 29 include a first electrode terminal 291 and a second electrode terminal 292. A terminal hole is created on the top cover 22 to accommodate the first electrode terminal 291, and a terminal hole is also created on the bottom cover 27 to accommodate the second electrode terminal 292. The first electrode terminal 291 is opposite to the second electrode terminal 292.

The battery cell 20 may further include a connecting component, also known as a current collecting member, configured to electrically connect the electrode assembly 24 to the electrode terminals 29.

In addition, each electrode assembly 24 may include two tabs, such as a first tab and a second tab. The first tab and the second tab are of opposite polarities. For example, when the first tab is a positive tab, the second tab is a negative tab. The first tabs of one or more electrode assemblies 24 are connected to one electrode terminal 29 by one connecting component, and the second tabs of one or more electrode assemblies 24 are connected to another electrode terminal 29 by another connecting component.

In an embodiment of this application, the first tab and the second tab of the battery cell 20 are disposed at two ends respectively. The first tab, that is, a copper tab, and the second tab, that is, an aluminum tab, are disposed opposite to each other.

In the battery cell 20, one or more electrode assemblies 24 may be disposed depending on actual use requirements. As shown in FIG. 4, one electrode assembly 24 is disposed in the battery cell 20.

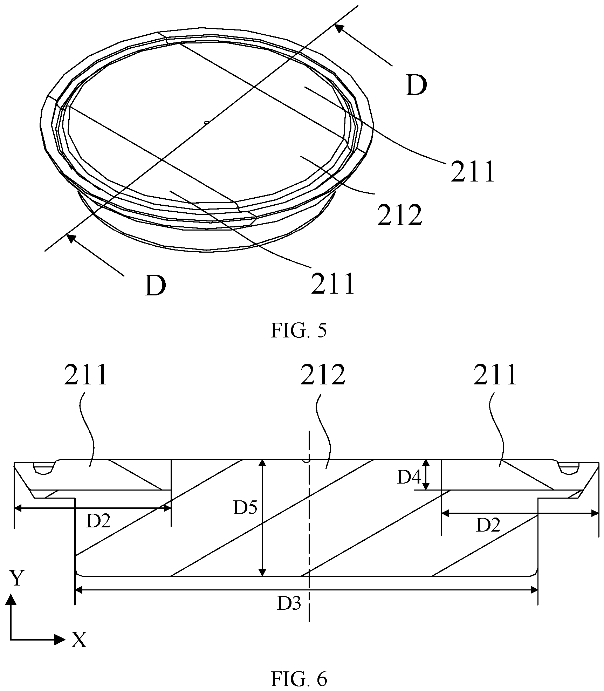

FIG. 5 is a schematic structural diagram of an end cap 21 according to an embodiment of this application; and FIG. 6 is a cross-sectional view of FIG. 5 sectioned along a D-D line. As shown in FIG. 5 and FIG. 6, the end cap 21 includes a first connection structure 211 and a second connection structure 212. The first connection structure 211 is connected to the second connection structure 212. The first connection structure 211 includes a first metal, and is configured to be welded to an electrode terminal 29. The second connection structure 212 includes a second metal, and is configured to be welded to a busbar component.

In an embodiment of this application, the electrode terminals 29 are a component used for electrical connection. To be specific, the current generated by the electrode assembly 24 is transmitted to the positive and negative electrodes of the battery cell 20 through the electrode terminals 29. More specifically, the current generated by the electrode assembly 24 is transmitted to the end cap 21 through the first electrode terminal 291 at one end, and is transmitted to the aluminum nail 28 through the second electrode terminal 292 at the other end.

In an embodiment of this application, the busbar component is configured to connect a plurality of battery cells 20 so that the plurality of battery cells 20 form a battery module.

It is hereby noted that the first connection structure 211 needs to be connected to the electrode terminal 29 by welding. If the first connection structure 211 is connected to the electrode terminal 29 by other means, then the internal resistance between the first connection structure and the electrode terminal will be relatively large, thereby still causing current loss of the battery cell 20. Therefore, the first metal included in the first connection structure 211 is necessarily a metal that can be welded to the electrode terminal 29.

The electrode terminal 29 is configured to implement internal electrical connection of the battery cells 20, and the busbar component is configured to electrically connect the battery cells 20 to the outside. When the first connection structure 211 is connected to the electrode terminal 29, electrical connection is implemented between the electrode terminal 29 and the first connection structure 211. When the first connection structure 211 is connected to the second connection structure 212, electrical connection is implemented between the first connection structure 211 and the second connection structure 212. When the busbar component is connected to the second connection structure 212, electrical connection is implemented between the second connection structure 212 and the busbar component.

In the above technical solution, by disposing the first connection structure 211 and the second connection structure 212, the current is enabled to flow from the electrode terminal 29 to the busbar component directly, thereby avoiding current loss caused by the need to pass through the housing 25 of the battery, and in turn, increasing the output current of the battery cell 20 and improving the performance of the battery 100.

In some embodiments, the electrode terminal is made of a material including copper. The first metal is copper or nickel-plated steel.

As mentioned earlier, the first connection structure 211 needs to be connected to the electrode terminal 29 by welding. Therefore, the first metal included in the first connection structure 211 is necessarily a metal that can be welded to the electrode terminal 29. When the electrode terminal 29, more specifically, the first electrode terminal 291, is made of copper, the first connection structure 211 that includes copper or nickel-plated steel can be directly welded to the copper-containing first electrode terminal 291.

In the above technical solution, by making the first metal in the first connection structure 211 be copper or nickel-plated steel, the first electrode terminal 291 can be directly welded to the first connection structure 211 to transmit a current more efficiently and avoid current loss.

In some embodiments, the busbar component is made of a material including aluminum. The second metal is aluminum.

When the busbar component is made of a material including aluminum and the second connection structure 212 includes aluminum, the aluminum-containing busbar component can be directly welded to the second connection structure 212. Aluminum is cheap and easily available, and facilitates mass production.

In the above technical solution, the electrical connection between the battery cell 20 and the outside is implemented by the aluminum-containing busbar component, thereby reducing the manufacturing cost of the battery 100 and facilitating applications in mass production. In addition, when the second metal in the second connection structure 212 is aluminum, a firm connection can be implemented between the battery cell 20 and the outside, thereby avoiding current loss.

In an embodiment of this application, the first tab in the battery cell 20 is made of copper. Therefore, the material of the electrode terminal 29 connected to the first tab needs to include copper. In other words, the material of the first electrode terminal 291 includes copper. The second tab is made of aluminum. Therefore, the material of the electrode terminal 29 connected to the second tab needs to include aluminum. In other words, the material of the second electrode terminal 292 includes aluminum. Referring to FIG. 4, the first tab is electrically connected to the first electrode terminal 291, the first electrode terminal 291 is electrically connected to the end cap 21, and then the end cap 21 is electrically connected to an external busbar component. The second tab is electrically connected to the second electrode terminal 292, the second electrode terminal 292 is electrically connected to an aluminum nail 28, and then the aluminum nail 28 is electrically connected to the external busbar component.

In some embodiments, the first connection structure 211 is embedded in the second connection structure 212.

It is hereby noted that the embedding here means that the entire first connection structure 211 is embedded in and connected to the second connection structure 212. In other words, a space in the second connection structure 212 is available for holding the complete first connection structure 211.

In the above technical solution, by embedding the first connection structure 211 into the second connection structure 212, a firm connection is implemented between the second connection structure 212 and the second connection structure 212.

Still referring to FIG. 6, as shown in FIG. 6, in some embodiments, the first connection structures 211 are symmetrically distributed at both ends of the second connection structure 212 by being centered on the second connection structure 212.

In order to facilitate connection and ensure a normal flow direction of the current, two electrode terminals are typically disposed in the battery cell 20. Therefore, by distributing the first connection structures 211 at both ends of the second connection structure 212, both electrode terminals are electrically connected to the first connection structures 211.

In the above technical solution, with the first connection structures 211 distributed symmetrically at both ends of the second connection structure 212 by being centered on the second connection structure 212, the first connection structures 211 distributed at both ends can be electrically connected to the electrode terminals respectively, thereby further improving the effect of electrical connection between the first connection structure 211 and the electrode terminal and ensuring normal transmission of the current.

In some embodiments, the second connection structure 212 is a columnar structure with step structures at both ends. The first connection structure 211 is embedded in the step structures.

In the structure of the end cap 21 shown in FIG. 6, the two ends of the second connection structure 212 include two notches, that is, step structures. The step structures are structures through which the first connection structures 211 are embedded. This is because during the assembling of the battery cell 20, the two electrode terminals need to be connected to the first connection structures 211 to implement the transfer of a current from the electrode terminals to the first connection structures211.

In addition, in order to facilitate the assembling of the end cap 21, the outermost side of the first connection structure 211 may be inclined to facilitate operation in fitting the end cap 21 onto the top cover 22. Similarly, the dimension of the second connection structure 212 on a level provided with the step structure may be different from the dimension of the second connection structure on a level provided with no step structure. This arrangement is equivalent to protrusion of the first connection structure 211 beyond the top cover 22 when the end cap 21 fits and covers the top cover 22, thereby also facilitating mounting and removal of the end cap 21.

In the above technical solution, when both ends of the first connection structure 211 are provided with a step structure, the first connection structure 211 can be embedded in the step structures. In this way, the first connection structures 211 are enabled to be symmetrically distributed on both ends of the second connection structure 212 by being centered on the second connection structure 212, thereby implementing an electrical connection between the electrode terminal and the first connection structure 211.

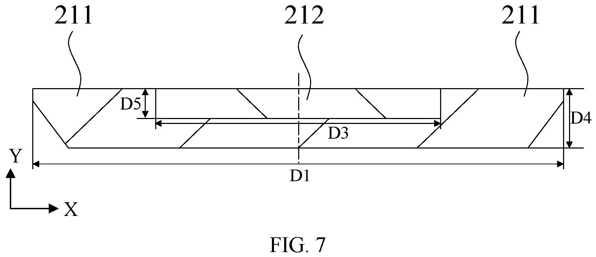

FIG. 7 is another cross-sectional view of FIG. 5 sectioned along a D-D line. As shown in FIG. 7, the second connection structure 212 is embedded in the first connection structure 211.

"Embed" here also means that a space in the first connection structure 211 is available for holding the entire second connection structure 212.

In the above technical solution, by embedding the second connection structure 212 into the first connection structure 211, a firm connection is implemented between the first connection structure 211 and the second connection structure 212, and between the second connection structure 212 and the busbar component.

In some embodiments, the second connection structure 212 is located in the middle of the first connection structure 211.

That the second connection structure 212 is located in the middle of the first connection structure 211 means that, in the structure of the end cap 21, the middle part of the end cap 21 is the second connection structure 211, and both ends of the end cap are the first connection structure 211.

In the above technical solution, the first connection structure 211 is configured to be electrically connected to the electrode terminal, and the second connection structure 212 is configured to electrically connect the battery cell 20 to the outside. By letting the second connection structure 212 be located in the middle of the first connection structure 211, a firm electrical connection can be implemented between the battery cell 20 and the outside by the first connection structure 211 and the second connection structure 212.

Still referring to FIG. 7, as shown in FIG. 7, the first connection structure 211 is a columnar structure with a groove in the middle. The second connection structure 212 is embedded in the groove.

When a groove is created in the middle of the first connection structure 211, the second connection structure 212 can be embedded into the groove.

In the above technical solutions, by letting the second connection structure 212 be located in the groove in the middle of the first connection structure 211, the second connection structure 212 is positioned at the center of the first connection structure 211, thereby implementing an electrical connection between the battery cell 20 and the outside.

In some embodiments, the first connection structure 211 is connected to the second connection structure 212 by thermal bonding.

The hot bonding here is hot rolling. Hot rolling is a process of rolling performed above a crystallization temperature. During hot rolling, the metal is of a high plasticity and a low deformation resistance, thereby greatly reducing the energy consumption during metal deformation. The hot rolling process can improve the processing performance of a metal and an alloy. This process crushes cast-state coarse grains, promotes healing of cracks, reduces or eliminates casting defects, changes a cast-state structure into a deformation-induced structure, and improves the processing performance of the alloy. In an embodiment of this application, copper and aluminum are bonded together at the crystallization temperatures of copper and aluminum.

In the above technical solution, the end cap structure connected by thermal bonding possesses a relatively low internal resistance. In other words, when the first connection structure 211 is connected to the second connection structure 212 by thermal bonding, the current can be more efficiently transferred from the first connection structure 211 to the second connection structure 212 to implement transfer of a relatively large current between the battery cell 20 and the outside, thereby improving the performance of the battery 100.

Further, in some embodiments, the first connection structure 211 is connected to the second connection structure 212 by pouring.

The pouring method means a process of pouring a molten metal into a solid to implement fusion of the metal and the solid. In an embodiment of this application, the melting point of copper is 1100 °C, and the melting point of aluminum is 660 °C. The liquid aluminum is injected into the groove of the copper-based first connection structure 211 to form an end cap 21.

In the above technical solution, the connection is implemented by pouring, thereby implementing a firmer connection between the first connection structure 211 and the second connection structure 212 in the end cap 21, and in turn, transmitting the current more efficiently.

In some embodiments, in a first direction X, a dimension D1 of the first connection structure 211 is not less than 2 mm, and the first direction X is perpendicular to an axis of the end cap 21.

If the dimension D1 of the first connection structure 211 in the first direction X is deficient, the first connection structure 211 is unable to be well connected to the electrode terminal.

It is hereby noted that, if the two first connection structures 211 are located at the two ends of the end cap 21 respectively, the dimension D2 of each first connection structure 211 in the first direction X is not less than 1 mm.

For example, in an embodiment of this application, the dimension D1 of the first connection structure 211 in the first direction X may be 3 mm, 5 mm, 10 mm, 100 mm, or the like. The value of D1 is not particularly limited herein, as long as the engineering requirements are satisfied.

In the above technical solution, by making the dimension D1 of the first connection structure 211 in the first direction X not less than 2 mm, that is, by making the dimension D2 of each first connection structure 211 in the first direction X not less than 1 mm, a firm connection is implemented between the first connection structure 211 and the electrode terminal, thereby implementing a firm electrical connection.

In some embodiments, in the first direction X, a dimension D3 of the second connection structure 212 is not less than 5 mm.

For example, in an embodiment of this application, the dimension D3 of the second connection structure 212 in the first direction X may be 5 mm, 10 mm, 50 mm, 100 mm, or the like. The value of D3 is not particularly limited herein, as long as the engineering requirements are satisfied.

The second connection structure 212 needs to be connected to the busbar component to implement an electrical connection between the battery cell 20 and the outside. If the dimension D3 of the second connection structure 212 in the first direction X is less than 5 mm, the connection between the second connection structure 212 and the busbar component is not firm.

In the above technical solution, by making the dimension D3 of the second connection structure 212 in the first direction X not less than 5 mm, a stable connection is ensured between the second connection structure 212 and the busbar component.

In some embodiments, in a second direction Y, a dimension D4 of the first connection structure 211 is not less than 0.8 mm. The second direction Y is parallel to the axis of the end cap 21.

For example, in an embodiment of this application, the dimension D4 of the first connection structure 211 in the second direction Y may be 1 mm, 2 mm, 10 mm, or the like. The value of D4 is not particularly limited herein, as long as the engineering requirements are satisfied.

The first connection structure 211 needs to be connected to the second connection structure 212 to ensure normal transmission of the current. If the dimension D4 of the first connection structure 211 in the second direction Y is deficient, the connection between the first connection structure 211 and the second connection structure 212 may be weak.

In the above technical solution, by making the dimension D4 of the first connection structure 211 in the second direction Y not less than 0.8 mm, the connection between the first connection structure 211 and the second connection structure 212 is ensured to be firm.

In some embodiments, in the second direction Y, a dimension D5 of the second connection structure 212 is not less than 2 mm.

For example, in an embodiment of this application, the dimension D5 of the second connection structure 212 in the second direction Y may be 3 mm, 10 mm, 50 mm, or the like. The value of D4 is not particularly limited herein, as long as the engineering requirements are satisfied.

It is hereby noted that the dimension D5 of the second connection structure in the second direction Yis made not less than 2 mm because, if a relatively large current needs to be transmitted to the busbar component, the welding between the end cap 21 and the busbar component is demanding. Therefore, the dimension D5 of the second connection structure 212 in the second direction Y needs to be increased.

In the above technical solution, the second connection structure 212 needs to be connected to the busbar component to implement an electrical connection between the battery cell 20 and the outside. By making the dimension D5 of the second connection structure 212 in the second direction Y not less than 2 mm, efficient transmission of the current is ensured between the second connection structure 212 and the busbar component.

An embodiment of this application further provides a battery cell 20. The battery cell 20 includes: an electrode assembly 24; a housing 25 with an accommodation cavity, configured to accommodate the electrode assembly 24; and a top cover 22, where a first terminal hole is created on the top cover 22; a first electrode terminal 291, mounted in the first terminal hole, where a recess is formed on a surface of the first electrode terminal 291, the surface being oriented away from the electrode assembly 24; and the end cap 21 according to any one of the foregoing embodiments. The end cap fits and covers the recess.

In some embodiments, the battery cell further includes: a bottom cover 27, where a second terminal hole is created on the bottom cover 27; and a second electrode terminal 292, mounted in the second terminal hole. The second electrode terminal 292 is opposite to the first electrode terminal 291.

In an embodiment of this application, the copper-containing first electrode terminal 291 is connected to a copper tab of the battery cell 20. To electrically connect the battery cell 20 to the outside with the current not passing through the housing 25 of the battery cell 20, a second electrode terminal 292 needs to be disposed at the other end of the battery cell 20, that is, at a position opposite to the first electrode terminal 291. The second electrode terminal 292 is connected to an aluminum tab.

By disposing the first electrode terminal 291 and the second electrode terminal 292 at both ends of the battery cell 20, that is, by disposing the first electrode terminal 291 opposite to the second electrode terminal 292, the current of the battery cell 20 is ensured to be output normally without passing through the housing 25 of the battery cell 20.

An embodiment of this application further provides a battery 100, including: a plurality of the battery cells 20 according to the foregoing embodiment; and a busbar component, configured to electrically connect the plurality of battery cells 20.

An embodiment of this application further provides an electrical device. The electrical device may include the battery 100 according to any one of the foregoing embodiments, and the battery is configured to provide electrical energy for the electrical device. Optionally, the electrical device may be a vehicle, watercraft, or spacecraft.

In the battery cell 20, the first electrode terminal 291 and the second electrode terminal 292 are disposed opposite to each other at two ends of the battery cell 20. The first electrode terminal 291 connected to the first tab (that is, the copper tab) is connected to the end cap 21 containing the first connection structure 211 and the second connection structure 212. The second electrode terminal 292 connected to the second tab (that is, the aluminum tab) is connected to the aluminum nail 28, thereby transmitting the current generated by the electrode assembly 24 to the outside directly, avoiding current loss caused by the need to pass through the housing 25, and in turn, increasing the output current of the battery cell 20 and improving the performance of the battery 100.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An end cap, **characterized in that** the end cap comprises:
a first connection structure and a second connection structure, wherein the first connection structure is connected to the second connection structure;
the first connection structure comprises a first metal, and is configured to be welded to an electrode terminal; and
the second connection structure comprises a second metal, and is configured to be welded to a busbar component.

2. The end cap according to claim 1, **characterized in that** the electrode terminal is made of a material comprising copper, and the first metal is copper or nickel-plated steel.

3. The end cap according to claim 1 or 2, **characterized in that** the busbar component is made of a material comprising aluminum, and the second metal is aluminum.

4. The end cap according to any one of claims 1 to 3, **characterized in that** the first connection structure is embedded in the second connection structure.

5. The end cap according to claim 4, **characterized in that** the first connection structures are symmetrically distributed at both ends of the second connection structure by being centered on the second connection structure.

6. The end cap according to claim 4 or 5, **characterized in that** the second connection structure is a columnar structure with step structures at both ends, and the first connection structure is embedded in the step structures.

7. The end cap according to any one of claims 1 to 3, **characterized in that** the second connection structure is embedded in the first connection structure.

8. The end cap according to claim 7, **characterized in that** the second connection structure is located in the middle of the first connection structure.

9. The end cap according to claim 7 or 8, **characterized in that** the first connection structure is a columnar structure with a groove in the middle, and the second connection structure is embedded in the groove.

10. The end cap according to any one of claims 4 to 6, **characterized in that** the first connection structure is connected to the second connection structure by thermal bonding.

11. The end cap according to any one of claims 1 to 10, **characterized in that**, in a first direction, a dimension of the first connection structure is not less than 2 mm, and the first direction is perpendicular to an axis of the end cap.

12. The end cap according to any one of claims 1 to 11, **characterized in that**, in a first direction, a dimension of the second connection structure is not less than 5 mm.

13. The end cap according to any one of claims 1 to 12, **characterized in that**, in a second direction, a dimension of the first connection structure is not less than 0.8 mm, and the second direction is parallel to an axis of the end cap.

14. The end cap according to any one of claims 1 to 13, **characterized in that**, in a second direction, a dimension of the second connection structure is not less than 2 mm.

15. A battery cell, **characterized in that** the battery cell comprises:
an electrode assembly;
a housing with an accommodation cavity, configured to accommodate the electrode assembly; and
a top cover, wherein a first terminal hole is created on the top cover;
a first electrode terminal, mounted in the first terminal hole, wherein a recess is formed on a surface of the first electrode terminal, the surface being oriented away from the electrode assembly; and
the end cap according to any one of claims 1 to 14, wherein the end cap fits and covers the recess.

16. The battery cell according to claim 15, **characterized in that** the battery cell further comprises:
a bottom cover, wherein a second terminal hole is created on the bottom cover;
a second electrode terminal, mounted in the second terminal hole, wherein the second electrode terminal is opposite to the first electrode terminal.

17. A battery, **characterized in that** the battery comprises:
a plurality of the battery cells according to claim 16; and
a busbar component, configured to electrically connect the plurality of battery cells.

18. An electrical device, **characterized in that** the electrical device comprises:
the battery according to claim 17, wherein the battery is configured to provide electrical energy.
